(19) Europäisches Patentamt
European Patent Office
Office européen des brevets

(11) **EP 4 047 550 B1**

(12) **EUROPEAN PATENT SPECIFICATION**

(45) Date of publication and mention
of the grant of the patent:
**13.11.2024 Bulletin 2024/46**

(21) Application number: **21158757.1**

(22) Date of filing: **23.02.2021**

(51) International Patent Classification (IPC):
**G06T 7/00** *(2017.01)*

(52) Cooperative Patent Classification (CPC):
**G06T 7/0004;** G06T 2207/10016;
G06T 2207/20084; G06T 2207/30236;
G06T 2207/30252

(54) **TRAIN INSPECTION SYSTEM**

ZUGPRÜFSYSTEM

SYSTÈME D'INSPECTION DE TRAIN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.08.2022 Bulletin 2022/34**

(73) Proprietor: **Hitachi, Ltd.**
**Tokyo 100-8280 (JP)**

(72) Inventors:
• **ELLIS, Robert**
**London, Greater London EC2Y 5AJ (GB)**
• **KATO, Tetsuji**
**London, Greater London EC2Y 5AJ (GB)**
• **YAMASHITA, Tomoaki**
**London, Greater London EC2Y 5AJ (GB)**

(74) Representative: **Mewburn Ellis LLP**
**Aurora Building**
**Counterslip**
**Bristol BS1 6BX (GB)**

(56) References cited:
**EP-A1- 3 321 860       CN-A- 106 600 581
CN-A- 111 652 227**

• **YONG SHEAN CHONG ET AL: "Abnormal Event
Detection in Videos using Spatiotemporal
Autoencoder", ARXIV.ORG, CORNELL
UNIVERSITY LIBRARY, 201 OLIN LIBRARY
CORNELL UNIVERSITY ITHACA, NY 14853, 6
January 2017 (2017-01-06), XP080739858, DOI:
10.1007/978-3-319-59081-3_23**

## Description

### Field of the Invention

The present invention relates to a train inspection system.

### Background

Visual inspection of trains is an essential part of railway maintenance. Such inspections are one of the most significant responsibilities of engineering maintenance teams, and take up large amounts of time because of the size and length of trains and the frequency with which they must be repeated. As a result, there is a significant cost associated with manual human inspection.

More particularly, trains have to undergo regular maintenance exercises combining part performance testing and regular inspection. Typically, these exercises may include a daily fitness-to-run examination, mid-term examinations at periods of around 30 to 50 days, and longer-term major overhauls. Visual inspection (of the underside, roof, exterior etc.) tasks can occupy between 8% and 10% of the exercise schedule over the course of a year. Visual inspection may not be required at every mid-term examination, but when performed they may take from 30 minutes to 3 hours to perform, depending on exam card requirements. Even with a relatively small fleet of trains, this is a significant maintenance burden, and with a larger fleet there is a significant increase in the engineer resource needed to safely undertake visual inspections. Automation of some visual inspection tasks can remove some of the maintenance burden or speed up inspection. In particular, it would be desirable to be able to assist a human inspector with an automated inspection report performed in parallel with human inspection or which can be performed during an otherwise non-productive train manoeuvre, such as train entry into a maintenance depot.

CN 111652227 B proposes a detection method for detecting damage to the bottom floor of a railway freight car. CN 106600581 A proposes a train operation automatic fault detection system.

The present invention has been devised in light of the above considerations.

### Summary of the Invention

In general terms, the present invention provides a system and a method for detecting and locating anomalies in trains based on a sequence of image frames captured by a static camera. Maintenance engineer teams can then use these results to help them find anomalies more easily when performing their visual inspections.

In a first aspect, the present invention provides a train inspection system according to claim 1.

Advantageously, subsequent maintenance engineer inspection of the train can then be focused on the locations of the predicted anomalies provided at the communication interface. This can help to reduce human resource costs and enable more efficient deployment of engineer time.

Conveniently, the static camera can be provided by a streaming camera service, a micro PC (personal computer) or IoT (internet of things) device to automatically detect train movement and capture the sequences of inspection image frames.

The image analysis of the sequence of inspection image frames by the computer program instructions may include: detecting beginning and end locations of the moving train in the sequence of inspection image frames; and allocating image frames to positions along the length of the train on the basis of frames corresponding to the detected beginning and end locations. More particularly, when the moving train is formed from a plurality of coupled cars, the image analysis of the sequence of inspection image frames by the computer program instructions may further include: detecting locations of car-to-car transitions in the sequence of inspection image frames; and also allocating image frames to positions along the length of the train on the basis of frames corresponding to the detected car-to-car transitions. In this way, the position of a frame in the sequence of inspection image frames can be correlated to an actual train location, translating the temporal nature of the captured sequence into distance information.

Conveniently the model may be a neural network configured to learn spatial feature representations in sequences of image frames and to learn temporal evolution of the spatial feature representations. The neural network may be trained on plural training sequences of inspection image frames of moving trains representative of normalcy, the neural network having an input layer that receives each training sequence of inspection image frames and an output layer that reconstructs a corresponding sequence of image frames, weights of the neural network being adjusted to minimise an objective function that measures differences between a given training sequence and the reconstructed sequence. Conveniently, each training sequence is typically input as a series of sub-sequences of the images frames of the entire sequence, rather than all the image frames of the entire sequence being inputted at the same time. Similarly, the reconstructed sequence is typically output as a series of corresponding sub-sequences which can be combined together to form the entire reconstructed sequence. By modelling states normalcy, rather than attempting to model different states of abnormality, a need to provide training data representing all possible, and sometimes rare, states of abnormality can advantageously be avoided. Effectively, the model allows a new sequence of inspection image frames to be compared against a dataset of normal image sequences to determine a degree of difference or anomalies in the new sequence.

As one possible architecture, the neural network may have an encoder section that forms a latent representation from each input sequence of inspection image frames, and a decoder section that operates on the latent representation to form the corresponding reconstructed sequence of image frames, the encoder section having one more convolutional layers that spatially encode individual frames of the input sequence and one or more long short-term memory layers that temporally encode a time-ordered sequence of the spatially encoded frames to produce the latent representation, and the decoder section having one or more long short-term memory layers that produce a time-ordered sequence of spatially encoded reconstructed frames from the latent representation, and one more convolutional layers that generate the corresponding reconstructed sequence from the produced spatially encoded sequence. However, alternative time-sensitive abnormal image detection architectures are also possible.

The neural network may be used to identify locations on the moving train where the sequence of inspection image frames indicates departures from normalcy by: inputting the sequence of inspection image frames into the neural network to output a respective reconstructed sequence of image frames therefrom; calculating values of an error function which performs pixelwise comparisons between image frames from the sequence of inspection image frames, and corresponding image frames from the respective reconstructed sequence of image frames; and determining departures from normalcy when the error function passes a predetermined threshold value.

The control command may increase the frame capture rate just for regions of the train including the identified locations of the associated outputted predicted anomalies stored in the data storage. By increasing the frame capture rate in this focused way, the inspection system can increase its sensitivity for trains or train regions where there is a higher likelihood of an anomaly recurring or persisting.

The communication interface may be configured to receive a maintenance report from maintenance engineer inspection of the train in response to the outputted predicted anomalies, the report interface sending the maintenance report to the processor system. The computer program instructions, when executed by the processor system may then: determine if the maintenance report identifies any actual anomalies; and when no actual anomalies are identified in the maintenance report, updates the stored model to reflect that the sequence of inspection image frames from the train is representative of normalcy; or when one or more actual anomalies are identified in the report, classifies the frame or frames in the sequence of inspection image frames showing the anomalies as being representative of those anomalies, and saves the classified frame or frames in an anomaly library. When no actual anomalies are identified, such updating can help to reduce the likelihood in the future of false-positive outputs of predicted anomalies. For example, when the model is a neural network trained on plural training sequences of inspection image frames of moving trains representative of normalcy, the instant false-positive sequence of inspection image frames can be classified as a training sequence representative of normalcy and used to retrain and thereby incrementally improve the neural network. As to the anomaly library, when enough examples of anomalies have been saved, it can be used to develop another model, e.g. in which a further neural network model is trained to search for similar image frames in further sequences of inspection image frames. This further model can therefore positively identify types of anomaly (rather than merely departures from normalcy), allowing the inspection system also to output suggested maintenance actions based on previous actions taken when this anomaly was encountered before. In such a further model, image masking may be used to focus modelling effort and subsequent anomaly identification just on parts or sections of interest, such as cabling, axles etc.

However, despite such masking, the spatiotemporal relationship between image frames can be preserved.

The disclosure provides a train depot having the train inspection system of the first aspect, and a line of track at which the static camera is installed to capture the sequence of inspection image frames of a train moving on the line of track. For example, the line of track may be a maintenance lane of the depot.

In a second aspect, the present invention provides a computer implemented method of performing train inspection according to claim 11.

Thus the method of the second aspect corresponds to the system of the first aspect. Accordingly, preferred or optional features of the system of the first aspect pertain also to the method of the second third aspect.

The method may include performing maintenance engineer inspection of the train in response to the outputted predicted anomalies to identify actual anomalies corresponding to the predicted anomalies. The method may include capturing the sequence of inspection image frames of the moving train by the static camera.

### Summary of the Figures

Embodiments and experiments illustrating the principles of the invention will now be discussed with reference to the accompanying figures in which:

**Figure 1** shows schematically a train inspection system;
**Figure 2** shows an example of an outputted predicted anomaly with, at left, an image frame of the anomaly with an associated time stamp and train location, and, at right, a plot of similarity to normalcy plotted against frame number or time with the departure from normalcy at the anomaly circled;
**Figure 3** shows schematically stages in a train car detection process;

**Figure 4** shows schematically an overview of car detection and frame allocation;

**Figure 5** shows schematically frame location determined by identifying the movement of a feature across a sequence of frames;

**Figure 6** shows schematically a neural network architecture;

**Figures 7A-C** illustrate schematically the training process of the neural network;

**Figure 8** shows schematically a process when no anomalies are predicted from a sequence of inspection image frames;

**Figure 9** shows schematically a process when an anomaly is predicted from a sequence of inspection image frames;

**Figure 10** shows schematically a process when an anomaly is predicted from a sequence of inspection image frames, and the type of anomaly is identified by a further model;

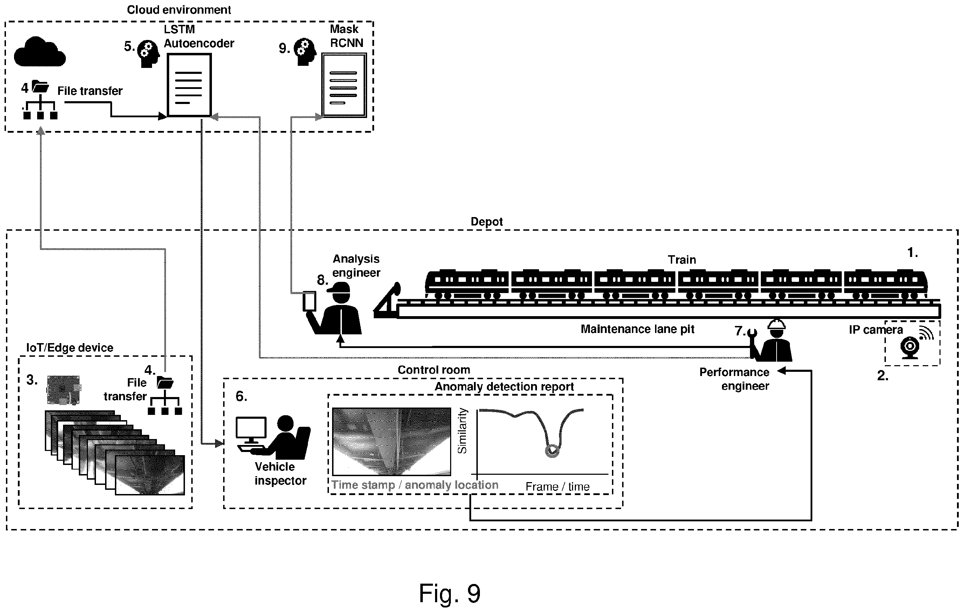

Conversely, when an anomaly is predicted, and a maintenance engineer is sent to confirm the presence of absence of the anomaly, there are two possibilities. The first is that no actual anomaly is confirmed. In this case, the sequence of inspection image frames can be added to the "normal" dataset and again used to refine the model. The second is that actual anomaly confirming the prediction is identified. In this case, the anomaly can be repaired, but the system can also the classify the frame or frames in the sequence of inspection image frames showing the anomaly as being representative of those anomalies, and saves the classified frame or frames in an anomaly library to build up a new image dataset that can eventually be used to train a new model (e.g. a mask RCNN discussed below) that can positively identify anomalies. This process is illustrated schematically in Figure 9.

### Detailed Description of the Invention

Aspects and embodiments of the present invention will now be discussed with reference to the accompanying figures. Further aspects and embodiments will be apparent to those skilled in the art.

Currently, computer vision and machine learning techniques are unable to completely replace human experts, especially in high risk and high trust requirement industries, such as railways and aerospace. Human expertise, however, can be supplemented by such techniques in relation to specific tasks to enhance overall performance capabilities. Alternatively, an expert human maintenance team with limited engineer resource and tasked with performing time-consuming and frequent inspections on a large fleet can benefit significantly by automation of simpler tasks that do not require safety-critical decision-making. The present invention provides a train inspection system which enables the automation of visual inspection tasks on trains, i.e. inspecting for anomalies such as undercarriage and roof damage, filter blockage, external and internal graffiti, and cosmetic damage. Advantageously, this automated inspection can take place during a depot manoeuvre that would be unsafe for a human inspector to perform, thus reclaiming engineer downtime and providing cost savings.

Conventional expert systems that address the issue of automated visual inspection typically adopt an image stitching approach in which multiple images of a single entity (e.g. an automobile) are stitched together preliminary to anomaly detection. With an automobile, which has a relatively small exterior, this is possible. However, a train typically comprises many relatively long cars, coupled in succession.

Stitching together many images of a train to form a single image of even single car, let alone the whole train, thus becomes problematic, as a high degree of precision is required from the recording device to ensure that an image that can be compared to a "normal" dataset or model is obtained. Even small changes to the speed of the train would affect the image processing requirements, and may necessitate specialist apparatus to accurately determine location on the moving train and to image capture at an appropriate dynamic rate. The same difficulties would apply to a moving inspection vehicle tracking beneath or alongside a stationary train. In addition, such a tracking vehicle would introduce safety concerns and cause delays due to the need to avoid conflicts with human personnel.

Automated visual inspection applied to a single image that spanned a complete train, by contrast, would likely suffer from an averaging effect across cars of the whole train that could make it difficult for an expert system to identify localised anomalies, or to accurately locate an anomaly once identified.

In addition, where an expert system relies on anomaly detection via positive identification of specific types of anomaly, a significant chance exists that the total variety of abnormal states is not fully considered in the system. In particular, as abnormalities or anomalies of many failure modes are rare compared to normal expected operation, building an image dataset of sufficient size to train a machine learning algorithm or similar can take a significant amount of time.

Accordingly, the present invention takes a different approach, and provides a train inspection system which uses a spatiotemporal data recording (i.e. a sequence of inspection image frames) of a moving train captured by a static camera. The system examines the spatiotemporal data recording and compares against a model which allows the data recording to be evaluated for departures from normalcy. For example, the model can be developed from (typically abundant) corresponding spatiotemporal data previously determined to be normal. The system can then determine a level of abnormality spatially, e.g. the level of abnormality of an individual frame in the image sequence, and temporally, e.g. the level of abnormality across a predetermined time period or set of image frames. Thus, with the spatiotemporal analysis, each image frame's own features can be considered, and a possible anomaly's position along the train can be identified by reference to its position in the sequence of frames. In this way, the existence and severity of anomalies (such as damage, dirt or missing parts) and their location can be identified and communicated to a human expert.

For example, armed with the results of the automated inspection, a maintenance engineer can inspect the train and determine whether the anomaly predicted by the system is accurate and corresponds to an actual anomaly or can be disregarded (i.e. no actual anomaly discovered). In the former case, the frame or frames from the spatiotemporal data recording which are representative of actual anomalies can be saved to an anomaly library for use in developing an expert system that performs anomaly detection via positive identification. In the latter case, the spatiotemporal data recording can be classified as representative of normalcy, and used to update the model. Thus the train inspection system enables a stepped approach in which the model used by the system is incrementally improved and basis for a positive identification expert system is also incrementally developed.

When an anomaly is visually confirmed by an engineer, the required repair work or maintenance is determined and logged. In addition, a unique identifier for the train, and generally also the affected car, can be recorded in data storage so that an increased risk level can be allocated to the train. In preparation for a subsequent inspection of the train, the previous maintenance log, image data and other recorded data can be forwarded to the train inspection system. This historic data can prompt the system to issue a warning notice to the maintenance engineers. At the train region containing the location of the previously identified anomaly, the system instructs the camera to dynamically increase the frame capture rate to obtain more detailed information of that region. If no subsequent anomaly is discovered, or the previous issue has not recurred, the region can be downgraded in risk for subsequent inspections, i.e. they can be performed at the normal frame capture rate.

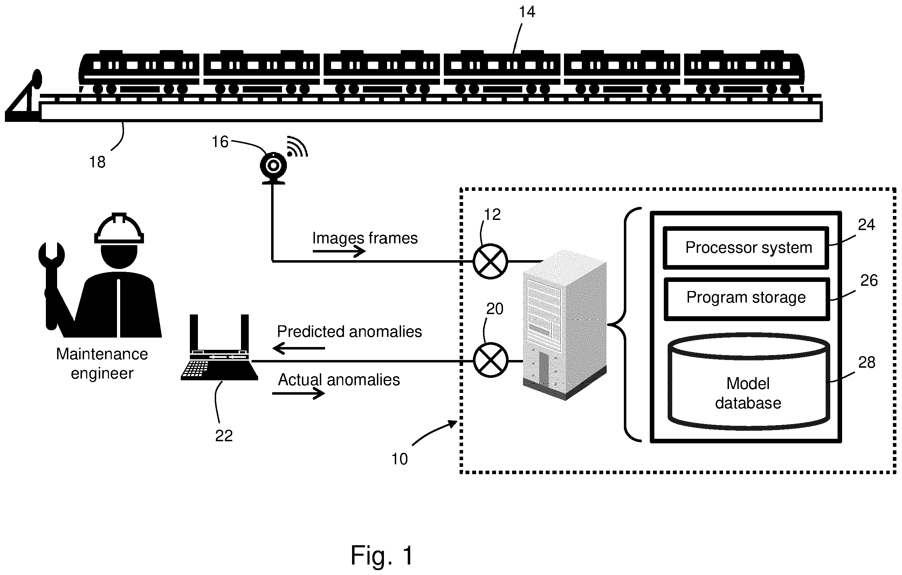

Figure 1 shows schematically such a train inspection system 10. The system has a camera interface 12 which receives image frames of a moving train 14 captured by a static camera 16 installed at a line of track. For example, the track can be a maintenance pit lane 18 of a train maintenance depot. The system further has a communication interface 20 which communicates with a convenient input/output device 22 such as a dedicated terminal or PC. The system 10 includes a processor system 24, and a database 26 and program storage 28 both coupled to the processor system. The system 10 also includes data storage (not shown in Figure 1) for recording train unique identifiers and associated records of previous visually confirmed anomalies and repair or maintenance work. Some or all of these items can be implemented in a local computer installation, for example in a control room of the maintenance depot. Alternatively, some or all of them can be implemented remotely, for example in a cloud computing environment. The database, program storage and data storage are forms of computer readable media.

More particularly, the static camera 16 captures a spatiotemporal data recording in the form of a sequence of inspection image frames of the moving train 14 which are then received by the processor system 24 via the camera interface 12. Typical frame capture rates are in the range from 10 to 60 frames per second. The processor system 24 may constantly run a script that detects significant movements in the image stream from the camera. A significant movement is for example entry or exit of a train that triggers that start and end of a capture sequence, while a change in lighting, or slight movement of the camera due to vibration etc. is not enough to trigger the camera. In this way capture of unnecessary data can be avoided.

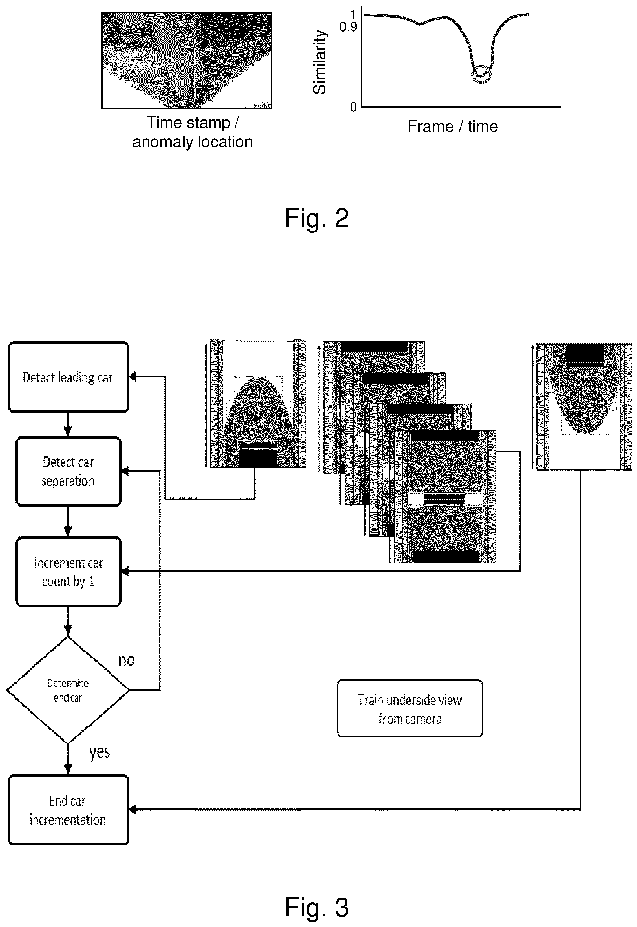

The program storage 28 stores computer program instructions for execution by the processor system 24. These instructions firstly cause the processor to analyse the sequence of inspection image frames to allocate image frames to locations along the length of the train 14. They then cause the processor system to use a model stored on the database 26 to evaluate the sequence of image frames for departures from normalcy. Predicted anomalies, characterised by their locations along the train and their corresponding departures from normalcy, are output via the communication interface 20 for reading on the input/output device 22. Figure 2 shows an example of an outputted predicted anomaly with, at left, an image frame of the anomaly with an associated time stamp and train location, and, at right, a plot of similarity to normalcy plotted against frame number or time with the departure from normalcy at the anomaly circled. Actual anomalies visually confirmed by an engineer, along with associated repair or maintenance work, can be reported to the system 10 via the input/output device 22 and the communication interface 20.

Next we consider in more detail the image analysis performed by the processor system 24 to allocate image frames to locations along the length of the train 14. The processor system 24 identifies the train cars that are passing through the image frames i.e. leading car, car 1, car 2, car n until the end of the train, and then allocates the spatiotemporal data, i.e. individual image frames, to the car which they represent. For example, the characteristics of a leading vehicle (such as aerodynamic shape edge detection, and the presence of a moving body on only one side of the image denoting a leading vehicle entering into the image with no connecting vehicle before it) are used to identify and label following images as the leading car. Similar characteristics (aerodynamic shape edge detection, and the presence of a moving body on the other side of the image denoting a leading vehicle leaving the image with no connecting vehicle after it) can be used to allocate frames to the end car. Intermediate cars can be detected by detecting car-to-car transitions in the sequence of inspection image frames (for example by detecting edges at the end of one car and the start of a new car and a coupling arrangement between the cars), and frames allocated to these cars accordingly. Figure 3 shows schematically stages in a train car detection process.

To assist the car detection and identification, the train inspection system 10 can accept input data from train onboard systems such as a TMS (Train Management System), OTMR (On Train Monitoring Recorder), maintenance scheduling or live inputs from an engineer. These can determine train unit number, and the direction of travel along the maintenance pit lane 18 to establish if car 1 is at the front of the train (normal forward travel) or back of the train (reverse travel).

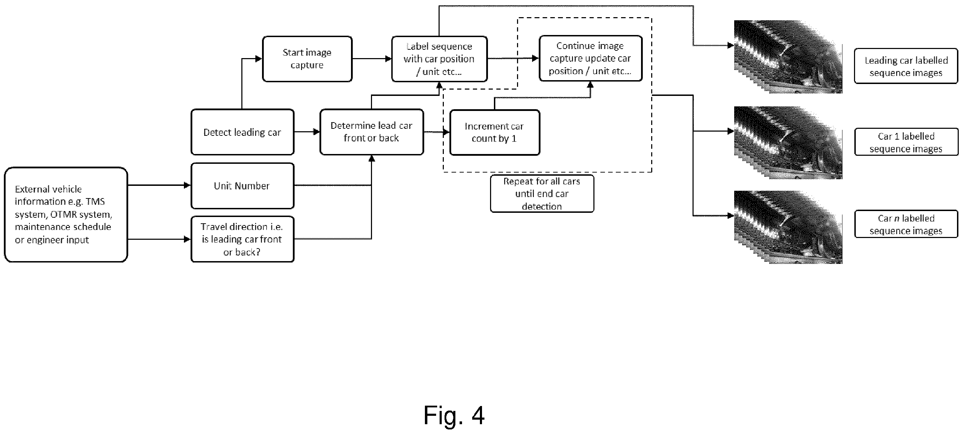

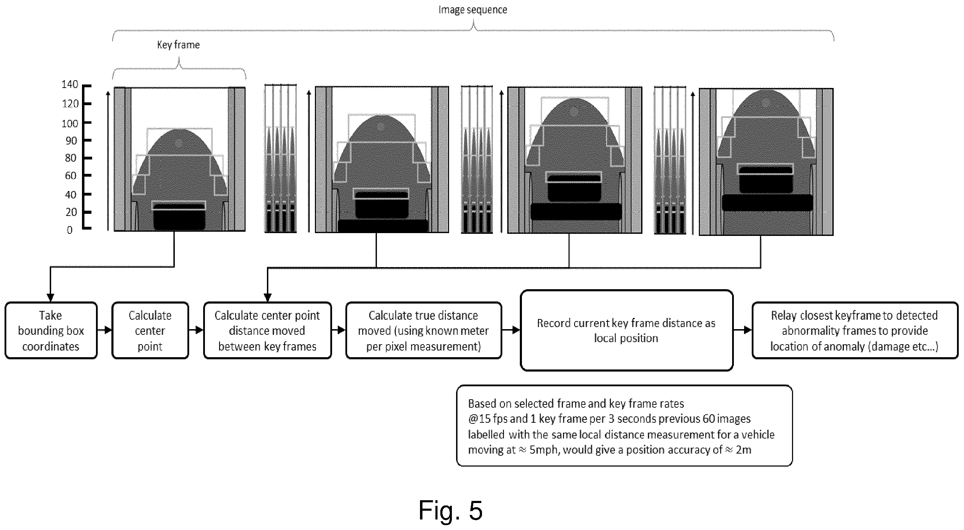

The image analysis allows features to be tracked and records their position at a desired key frame rate, which may be the same as the actual capture frame rate. By comparing the position of a feature between key frames a measurement of distance can be calculated. Key frames can then be labelled as reference positions from the start of the train and/or from the start of their respective car. Non-key frames can be labelled with the distance label of the nearest key-frame. Typically, the result is a set of image frames for each car of the train, as shown schematically in Figure 4, which is an overview of car detection and frame allocation. Assuming a constant frame rate and constant train travel speed, the location of any given frame on the train (specified e.g. by car number and a distance from an end of the car) can then be determined from frame number relative to given key frame. Alternatively or additionally, if a relationship between number of pixels and distance is established, frame locations can be determined by identifying the movement of a feature across a sequence of frames, a shown schematically in Figure 5. More accurate location can be provided by taking account of any variations in train travel speed, key frame rate and/or capture frame rate. Variations in these rates can be used to vary the accuracy of anomaly localisation and processing requirements for edge detection. However, they may also be varied to suit track speed limits, vehicle types and image capture requirements. Knowing the frame location on the train allows any anomaly (e.g. damage, dirt, missing part etc.) detected by a frame to be correspondingly located.

Next we consider in more detail the model, and how it is used to identify locations where there are departures from normalcy.

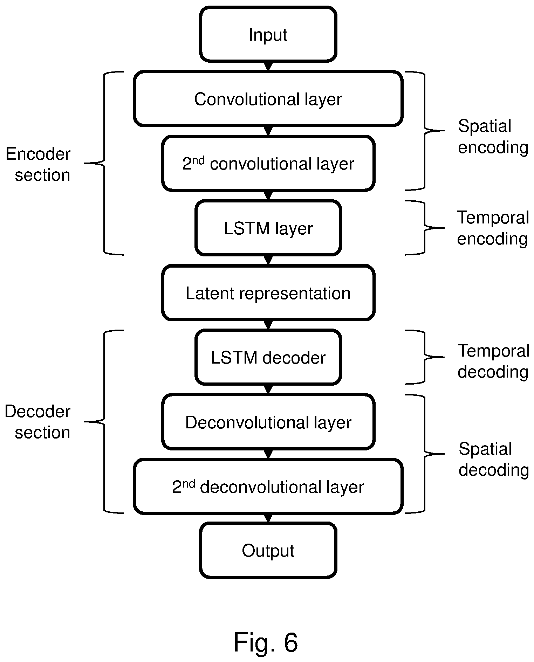

Conveniently the model can be a neural network configured to learn spatial feature representations in sequences of image frames and to learn temporal evolution of the spatial feature representations. Figure 6 shows schematically a possible architecture of such a neural network. It is based on an "autoencoder" architecture described by Yong Shean Chong *et al*. Further discussion of spatiotemporal learning is described by Mahmudul Hasan *et al*. The neural network has an input layer and an output layer. The input layer receives a sequence of inspection image frames of a moving train, which is one of plural training sequences in a training phase of the neural network, or an inspection image frame captured by the camera 16 in actual use of the model. The output layer provides a reconstructed sequence of image frames of a moving train. Between these layers are an encoder section which spatially and temporally encodes the input sequence, a latent representation of the input sequence, and a decoder section that generates the reconstructed sequence of image frames from the latent representation. The encoder section typically has one more convolutional layers that spatially encode individual frames of the training sequence and one or more long short-term memory (LSTM) layers that temporally encode sub-sequences of the spatially encoded frames to produce the latent representation. The decoder section does the reverse and typically has one or more LSTM layers that generate sub-sequences of spatially encoded reconstructed frames from the latent representation, and one more convolutional layers that generate the reconstructed sequence from the generated sub-sequences.

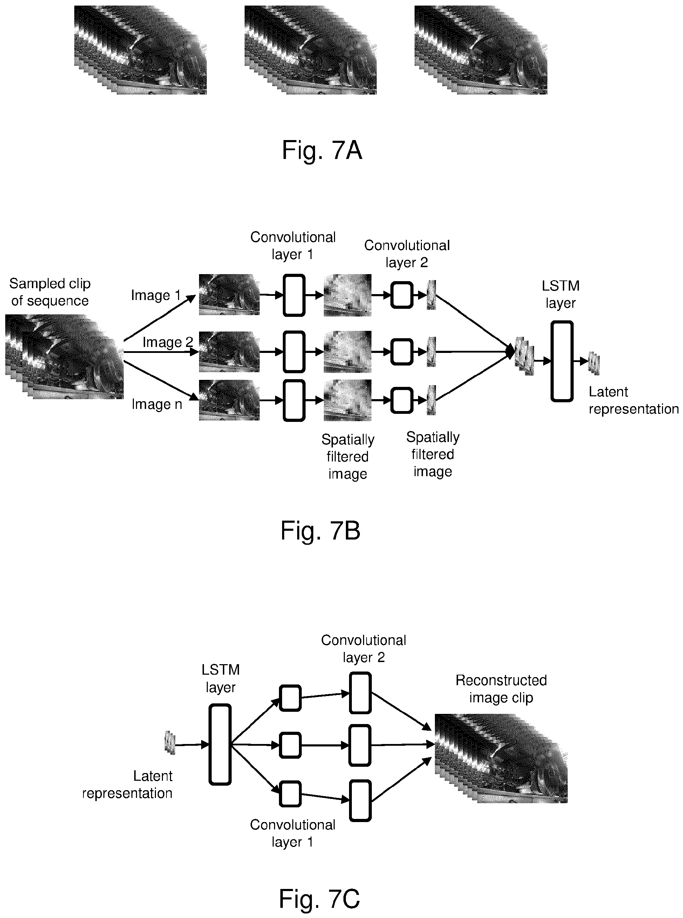

Figures 7A-C illustrate schematically the training process of the neural network. As shown at Figure 7A, a "normal" dataset of plural training sequences of inspection image frames of a moving train is accumulated, the sequences and the trains being representative of normalcy. Typically the inspection images are greyscale rather than colour. Figure 7B then shows schematically the operation of the encoder section. Each training sequence is inputted into the neural network, generally as a series of sampled clips (i.e. sub-sequences) of the sequence. The first convolutional layer spatially filters each of the n (where n is typically 5-10) images from each clip, and the second convolutional layer repeats that process. The LSTM layer then forms the latent representation from the n doubly filtered images. Figure 7C shows schematically the reverse operation by which the decoder section generates a reconstructed sub-sequence corresponding to each clip.

The aim of the training is to adjust the weights of the neural network so that the reconstructed sequence is optimally representative of the training sequences. More particularly, the model can be trained using back-propagation in an unsupervised manner, by minimizing a reconstruction error of the reconstructed sequence from the training sequences. A frame error e can be determined by performing a pixelwise comparison for each image frame of a training sequence and the corresponding frame of the reconstructed sequence, calculating the Euclidean distance between the two frames:

$$e(x, y, t) = \|I(x, y, t) - f_W(I(x, y, t))\|_2$$

where *I* is intensity, *x* and *y* are pixel coordinates, *t* is the time of the given frame equivalent to frame position along the train), and *fw* is the learned weights of the spatiotemporal model, and then summing over all the pixelwise errors in the given frame to give the reconstruction error of that frame:

$$e(t) = \sum_{(x,\ y)} e(x,\ y,\ t)$$

The reconstruction error of a clip or sub-sequence of frames can be calculated by summing *e(t)* over those frames. Typically the training is performed to minimise the reconstruction errors of clips or sub-sequences of frames, rather than the reconstruction errors of individual frames or the reconstruction error of an entire sequence.

Once trained, the model can be used to identify locations on a moving train where a sequence of actual inspection image frames indicates departures from normalcy passing a threshold value. To this end, the actual (and again typically grayscale) inspection image frames are inputted into the neural network and the corresponding reconstructed sequence of image frames is outputted from the network. Again the inspection image frames can be inputted as separate clips (i.e. sub-sequences of frames), with corresponding reconstructed clips being generated by the neural network. The reconstruction error discussed above is calculated for each clip by comparing the actual inspection image frames with the reconstructed image frames. An abnormality score $s_a$ is then calculated for each clip by scaling the reconstruction error between 0 and 1:

$$s_a = (s_a - s_{a,min})/s_{a,max}$$

where $s_{a,min}$ is the smallest reconstruction error of all the reconstruction errors of the set of clips from that sequence of actual inspection image frames, and $s_{a,max}$ is the largest reconstruction error of all the reconstruction errors of the set of clips from that sequence of actual inspection image frames, and converted into a similarity to normalcy (i.e. regularity) score $s_r$ for each clip by subtracting from 1:

$$s_r = 1 - s_a$$

Values of $s_r$ can be plotted against frame number or time, and departures from normalcy passing a predetermined threshold identified. As mentioned above, this can be outputted via the communication interface 20 for reading on the output device 22, for example with an image of the respective image frame showing the predicted anomaly and an indication of its location as shown in Figure 2. In this example, the predetermined threshold is passed when $s_r$ drops below 0.9.

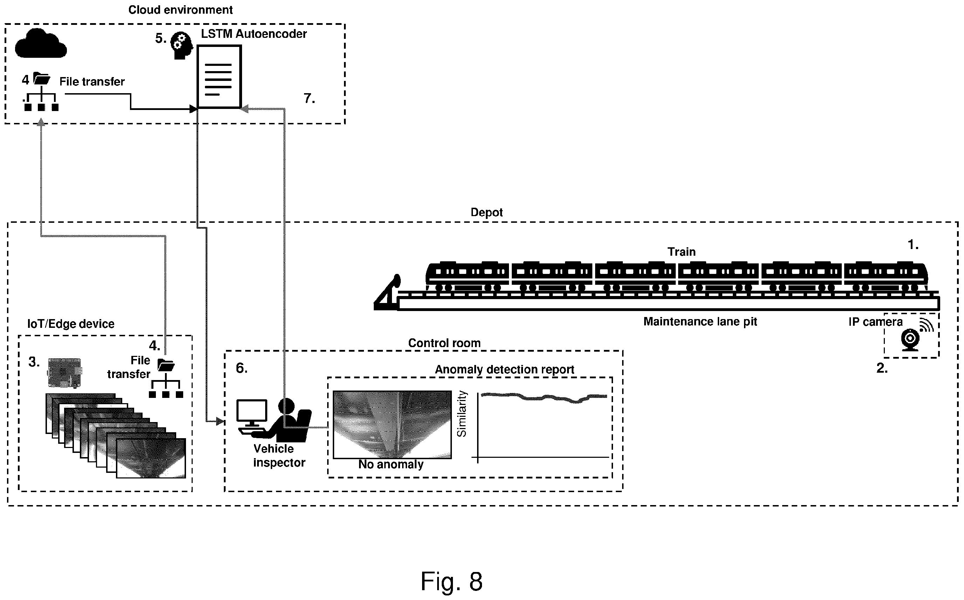

When no anomalies are predicted for a given sequence of inspection image frames, the sequence can be added to the "normal" dataset and used to further refine the model. The overall process is illustrated schematically in Figure 8. Numbered stages 1 to 7 in Fig. 8 are as follows:

> 1. Train enters depot from the right, moves past camera
> 2. IP camera is constantly streaming
> 3. IoT/edge pc detects movement in camera stream triggering image sequence capture
> 4. Automatic file transfer to cloud environment (FTP etc.)
> 5. New image sequence is passed to anomaly detection model (LSTM Autoencoder)
> 6. Annotated video or image sequence is returned to control room showing no anomaly, sequence is normal status
> 7. Confirmation of normal status by engineer allows most recent image sequence to be added to "normal" dataset, automatically retrained / model update.

Conversely, when an anomaly is predicted, and a maintenance engineer is sent to confirm the presence or absence of the anomaly, there are two possibilities. The first is that no actual anomaly is confirmed. In this case, the sequence of inspection image frames can be added to the "normal" dataset and again used to refine (i.e. incrementally improve) the model. The second is that an actual anomaly confirming the prediction is identified. In this case, the anomaly can be repaired, but the system also the classifies the frame or frames in the sequence of inspection image frames showing the anomaly as being representative of those anomalies, and saves the classified frame or frames in an anomaly library to build up a new image dataset that can eventually be used to train a new model (e.g. a mask region-based convolutional neural network (RCNN)) that can positively identify anomalies. This process is illustrated schematically in Figure 9. Numbered stages 1 to 9 in Fig. 9 are as follows:

> 1. Train enters depot from the right, moves past camera
> 2. IP camera is constantly streaming
> 3. IoT/edge pc detects movement in camera stream triggering image sequence capture
> 4. Automatic file transfer to cloud environment (FTP etc.)
> 5. New image sequence is passed to anomaly detection model (LSTM Autoencoder)
> 6. Annotated video or image sequence is returned to control room showing timestamp and linear position of the anomaly
> 7. Location information of anomalous images are relayed to an engineer for visual confirmation

> • Repair or maintenance is undertaken, detail of anomaly (damage, fault etc) is relayed to anal-

*ysis engineers*
*Or*
*• If no anomaly is confirmed engineer overrules the model's decision, automatically retrained to consider most recent sequence as "normal" data*

*8. Data engineer compiles new image dataset of anomaly (damage, fault etc.) with a label and maintenance work order that was applied*
*9. As recurrent anomaly occurrence increases a new image classification model is developed (Mask RCNN)*

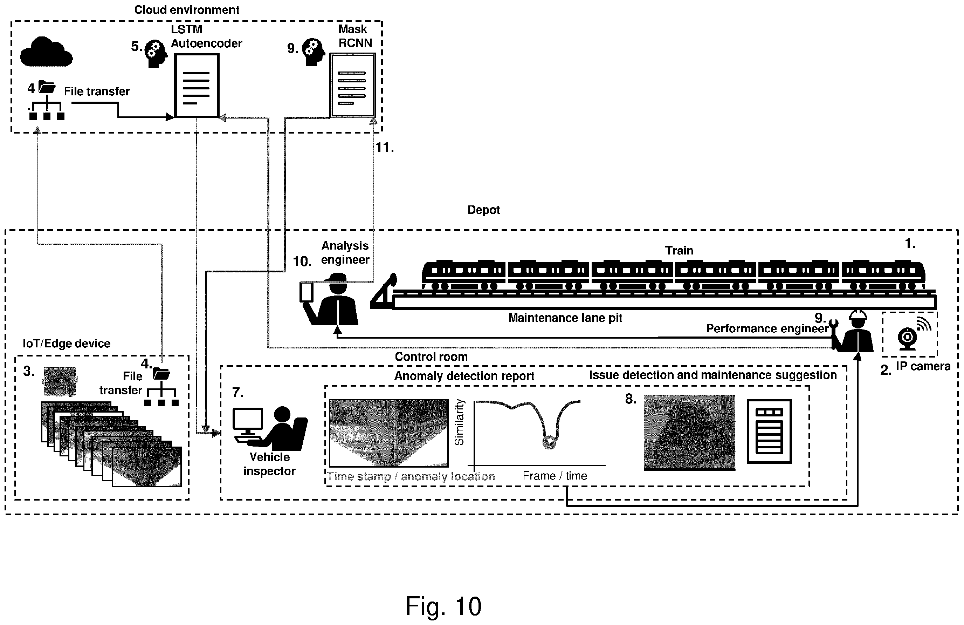

The new model is thus developed in an incremental or stepped fashion. When it is sufficiently developed the process illustrated schematically in Figure 10 can be applied in which the mask RCNN model identifies the type anomaly and optionally provides a maintenance suggestion. Numbered stages 1 to 11 in Fig. 10 are as follows:

*1. Train enters depot from the right, moves past camera*
*2. IP camera is constantly streaming*
*3. IoT/edge pc detects movement in camera stream triggering image sequence capture*
*4. Automatic file transfer to cloud environment (FTP etc.)*
*5. New image sequence is passed to anomaly detection model (LSTM Autoencoder)*

*• Images signalled as anomalous are passed to classification segmentation model*

*6. Images flagged as anomalous are passed to the Mask RCNN model to identify if the anomaly can be classified as a fault or damage that has been observed before.*
*7. Annotated video or image sequence is returned to control room showing timestamp and linear position of the anomaly*
*8. Segmented image with detected recurrent issue (damage, fault etc.) is also returned to control room if available (from 6)*
*9. Location information of anomalous images are relayed to and engineer for visual confirmation*

*• Where recurrent issue is detected, cause and maintenance work are suggested to the investigating engineer*
*Or*
*• If no anomaly is confirmed engineer overrules the models decision, automatically retrained to consider the most recent sequence as "normal" data*

*10. Analysis engineer compiles new image dataset*

*of anomaly (damage, fault etc.) with a label and maintenance work order that was applied*
*11. New examples of existing faults or examples completely new faults are added to the Mask RCNN model.*

The mask RCNN uses machine learning to segment image frames prior to anomaly detection to focus attention on only specific parts of the train. The parts are objects of interest that are pre-classified by expert engineers. Masks are applied to areas of interest so that non-areas of interest (i.e. regions outside of the masks) have their image information removed (i.e. pixel intensities or colour set to 0). By masking in this way, the objects of interest retain their spatiotemporal relationship with the image frames.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function. The term "computer readable medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" includes, but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a computer readable medium. One or more processors may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

*References*

A number of publications are cited above in order to more fully describe and disclose the invention and the state of the art to which the invention pertains. Full citations for these references are provided below.

Yong Shean Chong, Yong Haur Tay, Abnormal Event Detection in Videos using Spatiotemporal Autoencoder (2017), arXiv:1701.01546.

Mahmudul Hasan, Jonghyun Choi, Jan Neumann, Amit K. Roy-Chowdhury, Larry S. Davis, Learning Temporal Regularity in Video Sequences (2016), arXiv:1604.04574.

**Claims**

1. A train inspection system (10) including:

    a camera interface (12) configured to receive a sequence of inspection image frames of a moving train (14) captured by a static camera (16);
    a processor system (24) configured to receive sequences of inspection image frames from the camera interface (12);
    a communication interface (20) configured to output results from the processor system (24);
    a database (28) coupled to the processor system (24) and storing a model which allows a sequence of image frames of a moving train (14) to be evaluated for departures from normalcy; and
    program storage (26) coupled to the processor system (24) and storing computer program instructions for execution by the processor system;
    wherein the computer program instructions, when executed by the processor system (24):

        image analyse the sequence of inspection image frames to allocate image frames to locations along the length of the train (14);
        use the model to identify locations on the moving train (14) where the sequence of inspection image frames indicates departures from normalcy passing a threshold value; and
        output the identified locations and the corresponding departures from normalcy at the communication interface (20) as predicted anomalies;

    **characterised in that**:

        each train (14) has a unique identifier, and the system further includes data storage coupled to the processor system (24) which stores, for a given train from which a sequence of inspection image frames was captured and for which predicted anomalies were outputted, the unique identifier of the given train and the associated outputted predicted anomalies;
        wherein:

            the camera interface (12) is further configured to issue control commands to the static camera (16);
            the processor system (24) is configured to receive the unique identifier identifying each train (14) for which the static camera (16) is to capture a sequence of inspection image frames; and
            the computer program instructions, when executed by the processor system (24), send a control command to the camera interface (12) to be issued to the static camera (16) to increase a frame capture rate for an inspection of a new train (14) when a unique identifier stored in the data storage matches the unique identifier of the new train.

2. A train inspection system (10) according to claim 1, wherein the image analysis of the sequence of inspection image frames by the computer program instructions includes:

> detecting beginning and end locations of the moving train (14) in the sequence of inspection image frames; and
> allocating image frames to positions along the length of the train (14) on the basis of frames corresponding to the detected beginning and end locations.

3. A train inspection system (10) according to claim 2, wherein the moving train (14) is formed from a plurality of coupled cars, and the image analysis of the sequence of inspection image frames by the computer program instructions further includes:

> detecting locations of car-to-car transitions in the sequence of inspection image frames; and
> also allocating image frames to positions along the length of the train (14) on the basis of frames corresponding to the detected car-to-car transitions.

4. A train inspection system (10) according to any one of the previous claims, wherein the model is a neural network configured to learn spatial feature representations in sequences of image frames and to learn temporal evolution of the spatial feature representations.

5. A train inspection system (10) according to claim 4, wherein the neural network is trained on plural training sequences of inspection image frames of moving trains (14) representative of normalcy, the neural network having an input layer that receives each training sequence of inspection image frames and an output layer that reconstructs a corresponding sequence of image frames, weights of the neural network being adjusted to minimise an objective function that measures differences between a given training sequence and the reconstructed sequence.

6. A train inspection system (10) according to claim 5, wherein the neural network has an encoder section that forms a latent representation from each input sequence of inspection image frames, and a decoder section that operates on the latent representation to form corresponding the reconstructed sequence of image frames, the encoder section having one more convolutional layers that spatially encode individual frames of the input sequence and one or more long short-term memory layers that temporally encode a time-ordered sequence of the spatially encoded frames to produce the latent representation, and the decoder section having one or more long short-term memory layers that produce a time-ordered sequence of spatially encoded reconstructed frames from the latent representation, and one more convolutional layers that generate the corresponding reconstructed sequence from the sub-produced spatially encoded sequence.

7. A train inspection system (10) according to claim 5 or 6, wherein the neural network is used to identify locations on the moving train (14) where the sequence of inspection image frames indicates departures from normalcy by:

> inputting the sequence of inspection image frames into the neural network to output a respective reconstructed sequence of image frames therefrom;
> calculating values of an error function which performs pixel-wise comparisons between image frames from the sequence of inspection image frames, and corresponding image frames from the respective reconstructed sequence of image frames; and
> determining departures from normalcy when the error function passes a predetermined threshold value.

8. A train inspection system (10) according to any one of the previous claims, wherein the control command increases the frame capture rate just for regions of the train (14) including the identified locations of the associated outputted predicted anomalies stored in the data storage.

9. A train inspection system (10) according to any one of the previous claims, wherein:

> the communication interface (20) is configured to receive a maintenance report from maintenance engineer inspection of the train (14) in response to the outputted predicted anomalies, the communication interface sending the maintenance report to the processor system (24); and
> the computer program instructions, when executed by the processor system:

>> determine if the maintenance report identifies any actual anomalies; and
>> when no actual anomalies are identified in the maintenance report, updates the stored model to reflect that the sequence of inspection image frames from the train (14) is representative of normalcy; or
>> when one or more actual anomalies are identified in the report, classifies the frame or frames in the sequence of inspection image frames showing the anomalies as being representative of those anomalies, and saves the classified frame or frames in an anomaly library.

10. A train depot having the train inspection system (10) according to any one of the previous claims, and a line of track at which the static camera (16) is installed to capture the sequence of inspection image frames of a train (14) moving on the line of track.

11. A computer implemented method of performing train inspection, wherein each train (14) has a unique identifier, the method including:

providing data storage which stores, for a given train from which a sequence of inspection image frames has been captured by a static camera (16) and for which predicted anomalies have been outputted, the unique identifier of the given train and the associated outputted predicted anomalies;

receiving the unique identifier identifying a new train (14) for which the static camera (16) is to capture a sequence of inspection image frames;

increasing a frame capture rate of the static camera (16) for an inspection of the new train (14) when a unique identifier stored in the data storage matches the unique identifier of the new train;

capturing a sequence of inspection image frames of the moving new train (14) by the static camera (16) at the increased frame capture rate;

providing a model which allows a sequence of image frames of a moving train (14) to be evaluated for departures from normalcy;

image analysing the sequence of inspection image frames to allocate image frames to locations along the length of the moving new train (14);

using the model to identify locations on the moving new train (14) where the sequence of inspection image frames indicates departures from normalcy passing a threshold value; and

outputting the identified locations and the corresponding departures from normalcy at a communication interface as predicted anomalies.

12. The method according to claim 11, further including: performing maintenance engineer inspection of the train (14) in response to the outputted predicted anomalies to identify actual anomalies corresponding to the predicted anomalies.

**Patentansprüche**

1. Zuginspektionssystem (10), umfassend:

eine Kameraschnittstelle (12), die konfiguriert ist, um eine Sequenz von Inspektionsbildrahmen eines sich bewegenden Zuges (14), die durch eine statische Kamera (16) aufgenommen wurde, zu empfangen;

ein Prozessorsystem (24), das konfiguriert ist, um Sequenzen von Inspektionsbildrahmen von der Kameraschnittstelle (12) zu empfangen;

eine Kommunikationsschnittstelle (20), die konfiguriert ist, Ergebnisse aus dem Prozessorsystem (24) auszugeben;

eine Datenbank (28), die mit dem Prozessorsystem (24) gekoppelt ist und ein Modell speichert, das es einer Sequenz von Bildrahmen eines sich bewegenden Zuges (14) ermöglicht, hinsichtlich Abweichungen von einem Normalzustand bewertet zu werden; und

einen Programmspeicher (26), der mit dem Prozessorsystem (24) gekoppelt ist und Computerprogrammbefehle zur Ausführung durch das Prozessorsystem speichert;

wobei die Computerprogrammbefehle, wenn sie durch das Prozessorsystem (24) ausgeführt werden, Folgendes umfassen:

Durchführen einer Bildanalyse der Sequenz von Inspektionsbildrahmen, um Positionen entlang der Länge des Zugs (14) Bildrahmen zuzuweisen;

Verwenden des Modells, um Positionen auf dem sich bewegenden Zug (14) zu identifizieren, für die die Sequenz von Inspektionsbildrahmen angibt, dass Abweichungen vom Normalzustand einen Schwellenwert übersteigen; und

Ausgeben der identifizierten Positionen und der entsprechenden Abweichungen vom Normalzustand an der Kommunikationsschnittstelle (20) als vorhergesagte Anomalien;

**dadurch gekennzeichnet, dass**:

jeder Zug (14) einen eindeutigen Identifikator aufweist und das System ferner einen Datenspeicher umfasst, der mit dem Prozessorsystem (24) gekoppelt ist, welcher für einen jeweiligen Zug, für den eine Sequenz von Inspektionsbildrahmen aufgenommen wurde und für den vorhergesagte Anomalien ausgegeben wurden, den eindeutigen Identifikator des jeweiligen Zugs und die zugeordneten ausgegebenen vorhergesagten Anomalien speichert;

wobei:

die Kameraschnittstelle (12) ferner dazu konfiguriert ist, Steuerbefehle an die statische Kamera (16) auszugeben;

das Prozessorsystem (24) konfiguriert ist, um den eindeutigen Identifikator zu empfangen, der jeden Zug (14), für den die statische Kamera (16) eine Sequenz von Inspektionsbildrahmen aufzunehmen hat, identifiziert; und

die Computerprogrammbefehle, wenn sie vom Prozessorsystem (24) ausgeführt werden, einen Steuerbefehl an die Kameraschnittstelle (12) senden, der an die statische Kamera (16) auszugeben ist, um eine Rahmenaufnahmerate für eine Inspektion eines neuen Zuges (14) zu erhöhen, wenn ein eindeutiger Identifikator, der im Datenspeicher gespeichert ist, mit dem eindeutigen Identifikator des neuen Zugs übereinstimmt.

2. Zuginspektionssystem (10) nach Anspruch 1, wobei die Bildanalyse der Sequenz von Inspektionsbildrahmen durch die Computerprogrammbefehle Folgendes umfasst:

Detektieren von Anfangs- und Endpositionen des sich bewegenden Zugs (14) in der Sequenz von Inspektionsbildrahmen; und
Zuweisen von Bildrahmen zu Positionen entlang der Länge des Zugs (14) beruhend auf Rahmen, die den detektierten Anfangs- und Endpositionen entsprechen.

3. Zuginspektionssystem (10) nach Anspruch 2, wobei der sich bewegende Zug (14) aus einer Vielzahl von gekoppelten Waggons gebildet ist und die Bildanalyse der Sequenz von Inspektionsbildrahmen durch die Computerprogrammbefehle ferner Folgendes umfasst:

Detektieren von Positionen von Waggon-zu-Waggon-Übergängen in der Sequenz von Inspektionsbildrahmen; und
außerdem Zuweisen von Bildrahmen zu Positionen entlang der Länge des Zugs (14) beruhend auf Rahmen, die den detektierten Waggon-zu-Waggon-Übergängen entsprechen.

4. Zuginspektionssystem (10) nach einem der vorangegangenen Ansprüche, wobei das Modell ein neuronales Netzwerk ist, das dazu ausgelegt ist, Darstellungen räumlicher Merkmale in Sequenzen von Bildrahmen zu lernen und eine zeitliche Entwicklung der Darstellungen räumlicher Merkmale zu lernen.

5. Zuginspektionssystem (10) nach Anspruch 4, wobei das neuronale Netzwerk anhand von mehreren Trainingssequenzen von Inspektionsbildrahmen von sich bewegenden Zügen (14), die den Normalzustand darstellen, trainiert wird, wobei das neuronale Netzwerk eine Eingabeschicht, die jede Trainingssequenz von Inspetktionsbildrahmen empfängt, und eine Ausgabeschicht, die eine entsprechende Sequenz von Bildrahmen rekonstruiert, aufweist, wobei Gewichtungen des neuronalen Netzwerks angepasst sind, um eine Zielfunktion, welche Unterschiede zwischen einer jeweiligen Trainingssequenz und der rekonstruierten Sequenz misst, zu minimieren.

6. Zuginspektionssystem (10) nach Anspruch 5, wobei das neuronale Netzwerk einen Verschlüsselungsabschnitt, der eine latente Darstellung aus jeder Eingangssequenz von Inspektionsbildrahmen bildet, und einen Entschlüsselungsabschnitt aufweist, der an der latenten Darstellung arbeitet, um die entsprechende rekonstruierte Sequenz von Bildrahmen zu bilden, wobei der Verschlüsselungsabschnitt eine oder mehrere Faltungsschichten, die einzelne Rahmen der Eingangssequenz räumlich verschlüsseln, und eine oder mehrere lange Kurzzeitspeicherschichten aufweist, die eine zeitlich geordnete Sequenz der räumlich verschlüsselten Rahmen zeitlich verschlüsseln, um die latente Darstellung zu erzeugen, und wobei der Entschlüsselungsabschnitt eine oder mehrere lange Kurzzeitspeicherschichten, die eine zeitlich geordnete Sequenz von räumlich verschlüsselten rekonstruierten Rahmen aus der latenten Darstellung erzeugen, und eine oder mehrere Faltungsschichten aufweist, die die entsprechende rekonstruierte Sequenz aus der als Nebenprodukt entstandenen räumlich verschlüsselten Sequenz erzeugen.

7. Zuginspektionssystem (10) nach Anspruch 5 oder 6, wobei das neuronale Netzwerk verwendet wird, um Positionen auf dem sich bewegenden Zug (14) zu identifizieren, bei denen die Sequenz von Inspektionsbildrahmen Abweichungen vom Normalzustand angibt, durch Folgendes:

Eingeben der Sequenz von Inspektionsbildrahmen in das neuronale Netzwerk, um eine entsprechende rekonstruierte Sequenz von Bildrahmen daraus auszugeben;
Berechnen von Werten einer Fehlerfunktion, die pixelweise Vergleiche zwischen Bildrahmen aus der Sequenz von Inspektionsbildrahmen und entsprechenden Bildrahmen aus der entsprechenden rekonstruierten Sequenz von Bildrahmen durchführt; und
Bestimmen von Abweichungen vom Normalzustand, wenn die Fehlerfunktion einen vorbestimmten Schwellenwert überschreitet.

8. Zuginspektionssystem (10) nach einem der vorangegangenen Ansprüche, wobei der Steuerbefehl die Rahmenaufnahmerate nur für jene Bereiche des Zugs (14) erhöht, die die identifizierten Positionen der im Datenspeicher gespeicherten zugeordneten ausgegebenen vorhergesagten Anomalien umfassen.

9. Zuginspektionssystem (10) nach einem der vorangegangenen Ansprüche, wobei:

die Kommunikationsschnittstelle (20) dazu ausgelegt ist, einen Wartungsbericht von einer Wartungsingenieursinspektion des Zugs (14) als Antwort auf die ausgegebenen vorhergesagten Anomalien zu empfangen, wobei die Kommunikationsschnittstelle den Wartungsbericht an das Prozessorsystem (24) sendet; und
die Computerprogrammbefehle, wenn sie vom Prozessorsystem ausgeführt werden, Folgendes umfassen:

Bestimmen, ob der Wartungsbericht aktuelle Anomalien identifiziert; und
wenn keine aktuellen Anomalien im Wartungsbericht identifiziert werden, das gespeicherte Modell aktualisieren, um wiederzugeben, dass die Sequenz von Inspektionsbildrahmen vom Zug (14) den Normalzustand darstellen; oder
wenn eine oder mehrere aktuelle Anomalien im Bericht identifiziert werden, den oder die Rahmen in der Sequenz von Inspektionsbildrahmen, die die Anomalien zeigen, als repräsentativ für diese Anomalien klassifizieren und den oder die klassifizierten Rahmen in einer Anomaliebibliothek speichern.

10. Zugdepot mit einem Zuginspektionssystem (10) nach einem der vorangegangenen Ansprüche, und einer Gleisstrecke, auf der die statische Kamera (16) installiert ist, um die Sequenz von Inspektionsbildrahmen eines Zugs (14) aufzunehmen, der sich auf der Gleisstrecke bewegt.

11. Computerimplementiertes Verfahren des Durchführens einer Zuginspektion, wobei jeder Zug (14) einen eindeutigen Identifikator aufweist, wobei das Verfahren Folgendes umfasst:

Bereitstellen eines Datenspeichers, der für einen jeweiligen Zug, von dem eine Sequenz von Inspektionsbildrahmen durch eine statische Kamera (16) aufgenommen und für den vorhergesagte Anomalien ausgegeben wurden, den eindeutigen Identifikator des jeweiligen Zugs und die zugeordneten ausgegebenen vorhergesagten Anomalien speichert;

Empfangen des eindeutigen Identifikators, der einen neuen Zug (14) identifiziert, für den die statische Kamera (16) eine Sequenz von Inspektionsbildrahmen aufzunehmen hat;
Erhöhen einer Rahmenaufnahmerate der statischen Kamera (16) für eine Inspektion des neuen Zuges (14), wenn ein im Datenspeicher gespeicherter eindeutiger Identifikator mit dem eindeutigen Identifikator des neuen Zugs übereinstimmt;
Aufnehmen einer Sequenz von Inspektionsbildrahmen des sich bewegenden neuen Zugs (14) durch die statische Kamera (16) mit der erhöhten Rahmenaufnahmerate;
Bereitstellen eines Modells, das es einer Sequenz von Bildrahmen eines sich bewegenden Zuges (14) ermöglicht, hinsichtlich Abweichungen von einem Normalzustand bewertet zu werden;
Durchführen einer Bildanalyse der Sequenz von Inspektionsbildrahmen, um Positionen entlang der Länge des sich bewegenden neuen Zugs (14) Bildrahmen zuzuweisen;
Verwenden des Modells, um Positionen auf dem sich bewegenden neuen Zug (14) zu analysieren, für die die Sequenz von Inspektionsbildrahmen angibt, dass Abweichungen vom Normalzustand einen Schwellenwert übersteigen; und
Ausgeben der identifizierten Positionen und der entsprechenden Abweichungen vom Normalzustand an einer Kommunikationsschnittstelle als vorhergesagte Anomalien.

12. Verfahren nach Anspruch 11, ferner umfassend: Durchführen einer Wartungsingenieursinspektion des Zugs (14) als Antwort auf die ausgegebenen vorhergesagten Anomalien, um aktuelle Anomalien, die den vorhergesagten Anomalien entsprechen, zu identifizieren.

## Revendications

1. Système d'inspection de train (10), comprenant :

une interface de caméra (12) configurée pour recevoir une séquence de trames d'images d'inspection d'un train en mouvement (14) capturée par une caméra statique (16) ;
un système à processeur (24) configuré pour recevoir des séquences de trames d'images d'inspection depuis l'interface de caméra (12) ;
une interface de communication (20) configurée pour délivrer en sortie des résultats à partir du système à processeur (24) ;
une base de données (28) couplée au système à processeur (24) et stockant un modèle qui permet à une séquence de trames d'images d'un train en mouvement (14) d'être évaluée pour des écarts par rapport à la normale ; et

une mémoire de programme (26) couplée au système à processeur (24) et stockant des instructions de programme informatique pour une exécution par le système à processeur ;

dans lequel les instructions de programme informatique, lorsqu'elles sont exécutées par le système à processeur (24) :

analysent par image la séquence de trames d'images d'inspection pour allouer des trames d'images à des emplacements le long de la longueur du train (14) ;

utilisent le modèle pour identifier les emplacements sur le train en mouvement (14) où la séquence de trames d'images d'inspection indique des écarts par rapport à la normale dépassant une valeur de seuil ; et

délivrent en sortie les emplacements identifiés et les écarts correspondants par rapport à la normale au niveau de l'interface de communication (20) en tant qu'anomalies prédites ;

**caractérisé en ce que** :

chaque train (14) présente un identifiant unique, et le système comprend en outre une mémoire de données couplée au système à processeur (24) qui stocke, pour un train donné à partir duquel une séquence de trames d'images d'inspection a été capturée et pour lequel des anomalies prédites ont été délivrées en sortie, l'identifiant unique du train donné et les anomalies prédites délivrées en sortie associées ;

dans lequel :

l'interface de caméra (12) est en outre configurée pour émettre des instructions de commande à la caméra statique (16) ;

le système à processeur (24) est configuré pour recevoir l'identifiant unique qui identifie chaque train (14) pour lequel la caméra statique (16) doit capturer une séquence de trames d'images d'inspection ; et

les instructions de programme informatique, lorsqu'elles sont exécutées par le système à processeur (24), envoient une instruction de commande à l'interface de caméra (12) à émettre vers la caméra statique (16) pour augmenter une vitesse de capture d'image pour une inspection d'un nouveau train (14) lorsqu'un identifiant unique stocké dans la mémoire de données correspond à l'identifiant unique du nouveau train.

2. Système d'inspection de train (10) selon la revendication 1, dans lequel l'analyse d'images de la séquence de trames d'images d'inspection par les instructions de programme informatique comprend les étapes consistant à :

détecter les emplacements de début et de fin du train en mouvement (14) dans la séquence de trames d'images d'inspection ; et

attribuer des trames d'images à des positions le long de la longueur du train (14) sur la base de trames correspondant aux emplacements de début et de fin détectés.

3. Système d'inspection de train (10) selon la revendication 2, dans lequel le train en mouvement (14) est formé à partir d'une pluralité de wagons couplés, et l'analyse d'images de la séquence de trames d'images d'inspection par les instructions de programme informatique comprend en outre les étapes consistant à :

détecter des emplacements des transitions de wagon à wagon dans la séquence de trames d'images d'inspection ;

et également attribuer des trames d'images à des positions le long de la longueur du train (14) sur la base de trames correspondant aux transitions de wagon à wagon détectées.

4. Système d'inspection de train (10) selon l'une quelconque des revendications précédentes, dans lequel le modèle est un réseau neuronal configuré pour apprendre des représentations de caractéristiques spatiales dans des séquences de trames d'images et pour apprendre l'évolution temporelle des représentations de caractéristiques spatiales.

5. Système d'inspection de train (10) selon la revendication 4, dans lequel le réseau neuronal est formé sur plusieurs séquences d'apprentissage de trames d'images d'inspection de trains en mouvement (14) représentatives de la normalité, le réseau neuronal présentant une couche d'entrée qui reçoit chaque séquence d'apprentissage de trames d'images d'inspection et une couche de sortie qui reconstruit une séquence correspondante de trames d'images, des poids du réseau neuronal étant ajustés pour minimiser une fonction objective qui mesure des différences entre une séquence d'apprentissage donnée et la séquence reconstruite.

6. Système d'inspection de train (10) selon la revendication 5, dans lequel le réseau neuronal présente une section de codeur qui forme une représentation latente à partir de chaque séquence d'entrée de trames d'images d'inspection, et une section de décodeur qui fonctionne sur la représentation latente pour former la séquence reconstruite correspondante de trames d'images, la section de codeur présentant une ou plusieurs couches convolutives qui codent spatialement des trames individuelles de la séquence d'entrée et une ou plusieurs couches de mémoire à court terme longues qui codent temporellement une séquence ordonnée dans le temps des trames codées spatialement pour produire la représentation latente, et la section de décodeur présentant une ou plusieurs couches de mémoire à court terme longues qui produisent une séquence ordonnée dans le temps de trames reconstruites codées spatialement à partir de la représentation latente, et une ou plusieurs couches convolutives qui génèrent la séquence reconstruite correspondante à partir de la séquence codée spatialement sous-produite.

7. Système d'inspection de train (10) selon la revendication 5 ou 6, dans lequel le réseau neuronal est utilisé pour identifier des emplacements sur le train en mouvement (14) où la séquence de trames d'images d'inspection indique des écarts par rapport à la normale par l'intermédiaire des étapes consistant à :

entrer la séquence de trames d'images d'inspection dans le réseau neuronal pour délivrer en sortie une séquence reconstruite respective de trames d'images à partir de celle-ci ; calculer des valeurs d'une fonction d'erreur qui effectue des comparaisons pixel par pixel entre des trames d'image de la séquence de trames d'images d'inspection, et des trames d'image correspondantes de la séquence reconstruite respective de trames d'image ; et déterminer des écarts par rapport à la normale lorsque la fonction d'erreur dépasse une valeur de seuil prédéterminée.

8. Système d'inspection de train (10) selon l'une quelconque des revendications précédentes, dans lequel l'instruction de commande augmente la vitesse de capture de trame uniquement pour des régions du train (14) comprenant les emplacements identifiés des anomalies prédites délivrées en sortie associées stockées dans la mémoire de données.

9. Système d'inspection de train (10) selon l'une quelconque des revendications précédentes, dans lequel :

l'interface de communication (20) est configurée pour recevoir un rapport de maintenance provenant de l'inspection de l'ingénieur de maintenance du train (14) en réponse aux anomalies prédites délivrées en sortie, l'interface de communication envoyant le rapport de maintenance au système à processeur (24) ; et les instructions de programme informatique, lorsqu'elles sont exécutées par le système à processeur :

déterminent si le rapport de maintenance identifie des anomalies réelles ; et lorsqu'aucune anomalie réelle n'est identifiée dans le rapport de maintenance, mettent à jour le modèle stocké pour refléter que la séquence de trames d'images d'inspection du train (14) est représentative de la normalité ; ou lorsqu'une ou plusieurs anomalies réelles sont identifiées dans le rapport, classe la trame ou les trames dans la séquence de trames d'images d'inspection montrant les anomalies comme étant représentatives de ces anomalies, et enregistre la trame classée ou les trames classées dans une bibliothèque d'anomalies.

10. Dépôt de trains présentant le système d'inspection de train (10) selon l'une quelconque des revendications précédentes, et une ligne de suivi au niveau de laquelle la caméra statique (16) est installée pour capturer la séquence de trames d'images d'inspection d'un train (14) se déplaçant sur la ligne de suivi.

11. Procédé mis en œuvre par ordinateur pour effectuer une inspection de train, dans lequel chaque train (14) présente un identifiant unique, le procédé comprenant les étapes consistant à :

fournir une mémoire de données qui stocke, pour un train donné à partir duquel une séquence de trames d'images d'inspection a été capturée par une caméra statique (16) et pour lequel des anomalies prédites ont été délivrées en sortie, l'identifiant unique du train donné et les anomalies prédites délivrées en sortie associées ; recevoir l'identifiant unique qui identifie un nouveau train (14) pour lequel la caméra statique (16) doit capturer une séquence de trames d'images d'inspection ; augmenter une fréquence de capture d'image de la caméra statique (16) pour une inspection du nouveau train (14) lorsqu'un identifiant unique stocké dans la mémoire de données correspond à l'identifiant unique du nouveau train ; capturer une séquence de trames d'images d'inspection du nouveau train en mouvement (14) par l'intermédiaire de la caméra statique (16) à la fréquence de capture de trame accrue ; fournir un modèle qui permet d'évaluer une séquence de trames d'images d'un train en mouvement (14) pour des écarts par rapport à la normale ;

analyse d'image de la séquence de trames d'images d'inspection pour allouer des trames d'image à des emplacements le long de la longueur du nouveau train en mouvement (14) ;

utiliser le modèle pour identifier les emplacements sur le nouveau train en mouvement (14) où la séquence de trames d'images d'inspection indique des écarts par rapport à la normale dépassant une valeur de seuil ; et

produire les emplacements identifiés et les écarts correspondants par rapport à la normale au niveau d'une interface de communication en tant qu'anomalies prédites.

12. Procédé selon la revendication 11, comprenant en outre l'étape consistant à :

effectuer une inspection d'ingénieur de maintenance du train (14) en réponse aux anomalies prédites délivrées en sortie pour identifier les anomalies réelles correspondant aux anomalies prédites.

Fig. 1

Time stamp /
anomaly location

Frame / time

Similarity

Fig. 2

Detect leading car

Detect car
separation

Increment car
count by 1

Determine
end car

no

yes

End car
incrementation

Train underside view
from camera

Fig. 3

Fig. 4

Fig. 5

Fig. 6

Fig. 7A

Fig. 7B

Fig. 7C

Fig. 8

Fig. 9

Fig. 10

Depot

Train
1.
2. IP camera
9. Performance engineer
Maintenance lane pit

Control room
Issue detection and maintenance suggestion
Anomaly detection report
8.
Similarity
Frame / time
Time stamp / anomaly location
7. Vehicle inspector
10. Analysis engineer

Cloud environment
Mask RCNN
9.
LSTM Autoencoder
5.
4. File transfer
11.

IoT/Edge device
3.
4. File transfer

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111652227 B

- CN 106600581 A

**Non-patent literature cited in the description**

- **YONG SHEAN CHONG ; YONG HAUR TAY.** Abnormal Event Detection in Videos using Spatiotemporal Autoencoder. *arXiv:1701.01546,* 2017

- **MAHMUDUL HASAN ; JONGHYUN CHOI ; JAN NEUMANN ; AMIT K. ROY-CHOWDHURY ; LARRY S. DAVIS.** Learning Temporal Regularity in Video Sequences. *arXiv:1604.04574,* 2016